# EUROPÄISCHE PATENTSCHRIFT

(11) **EP 0 993 397 B1**
(45) Veröffentlichungstag und Bekanntmachung des Hinweises auf die Patenterteilung: **26.02.2003**
(21) Anmeldenummer: 98937533.2
(22) Anmeldetag: 22.06.1998
(51) Int. Cl.: B60R 25/00, B60R 25/04

(54) **SCHLÜSSELLOSE ZUGANGSKONTROLLEINRICHTUNG FÜR KRAFTFAHRZEUGE SOWIE VERFAHREN ZUM DURCHFÜHREN EINER SCHLÜSSELLOSEN ZUGANGSBERECHTIGUNGSKONTROLLE BEI KRAFTFAHRZEUG**
KEYLESS DEVICE FOR CONTROLLING ACCESS TO AUTOMOBILES AND KEYLESS METHOD FOR CHECKING ACCESS AUTHORISATION
DISPOSITIF DE CONTROLE D'ACCES SANS CLE POUR VEHICULES A MOTEUR ET PROCEDE POUR REALISER UN CONTROLE D'AUTORISATION D'ACCES SANS CLE DANS UN VEHICULE A MOTEUR

(30) Priorität: 05.07.1997 DE 19728761
(43) Veröffentlichungstag der Anmeldung: 19.04.2000
(73) Patentinhaber: Leopold Kostal GmbH & Co. KG, 58507 Lüdenscheid (DE); Stobbe, Anatoli, 30890 Barsinghausen (DE)
(72) Erfinder: STOBBE, Anatoli, D-30890 Barsinghausen (DE); PRETZLAFF, Volker, D-58638 Iserlohn (DE)
(74) Vertreter: Schröter & Haverkamp
(86) Internationale Anmeldenummer: EP9803799
(87) Internationale Veröffentlichungsnummer: WO99002377

(56) Entgegenhaltungen:
- EP-A- 0 521 547
- EP-A- 0 523 602
- DE-A- 4 435 894
- FR-A- 2 740 411
- FR-A- 2 740 500

## Beschreibung

Die Erfindung bezieht sich auf das Gebiet schlüsselloser Zugangskontrolleinrichtungen nach dem Oberbegriff des Patentanspruchs 1. Eine derartige Einrichtung ist aus der EP-A-0 521 547 bekannt.

Ferner betrifft die Erfindung ein Verfahren zum Durchführen einer schlüssellosen Zugangsberechtigungskontrolle bei Kraftfahrzeugen.

Eine derartige Vorrichtung und ein derartiges Verfahren sind aus den Aufsätzen "Ein Fahrzeugsicherungssystem ohne mechanischen Schlüssel" von Ch. Schneider und U. Schrey, erschienen in: "Automobiltechnische Zeitschrift 96" (1994) Nr. 5 sowie "Smart-Card - Abschied vom Autoschlüssel" von U. Schrey, Ch. Schneider und M. Siedentrop, erschienen in: "Siemens-Zeitschrift 1/96" bekannt. Die in diesen Dokumenten beschriebene Zugangskontrolleinrichtung besteht im wesentlichen aus einer dem Kraftfahrzeug zugeordneten Sende-Empfangseinrichtung und aus einem mobilen Transponder. Die Sende-Empfangseinrichtung umfaßt drei im induktiven Frequenzbereich arbeitende Sender (NF-Sender), von denen jeweils einer der Fahrertür, ein weiterer der Beifahrertür und der dritte dem Fahrzeugheck zugeordnet sind. Die Sendeantennen der NF-Sender sind in die jeweiligen Seitentüren bzw. in die hintere Stoßstange integriert. Jeder NF-Sender ist mit dem der jeweiligen Tür zugeordneten Türgriff bzw. Kofferraumtaste dergestalt verbunden, daß beim Betätigen eines solchen der diesem Fahrzeugbereich zugeordnete NF-Sender ein niederfrequentes Codesignal (NF-Signal) aussendet. Die übrigen NF-Sender verbleiben dagegen ruhig und senden keine NF-Signale aus.

Die dem Kraftfahrzeug zugeordneten Sende-Empfangseinrichtung ist ferner mit einem HF-Empfänger zum Empfangen eines HF-Signales des Transponders ausgerüstet. Das in dem HF-Empfänger empfangene Antwortsignal des Transponders beaufschlagt ein mit einem Prozessor ausgestattetes Steuergerät, in welchem das empfangene Antwortsignal, welches als Kryptocode empfangen worden ist, entschlüsselt und auf seine Gültigkeit hin überprüft wird. Wird eine Übereinstimmung festgestellt, wird ein entsprechendes Steuersignal an den jeweiligen Türverriegelungsmechanismus zum Entriegeln derjenigen Türe gegeben, deren Türgriff zuvor betätigt worden ist.

Als Transponder ist eine sogenannte Zugangskarte mit einem NF-Empfänger und einem HF-Sender kleiner Leistung vorgesehen. Die induktive Empfangsantenne ist als Rahmenantenne, die hochfrequent strahlende Sendeantenne als Leiterplattenantenne ausgeführt. Das von dem NF-Empfänger des Transponders empfangene NF-Signal wird in dem Transponder decodiert. Anschließend verrechnet ein dem Transponder zugeordneter Mikroprozessor das in dem NF-Signal enthaltene Codewort mit einem Sicherheitsalgorithmus und sendet das Ergebnis mittels der HF-Sende-Einheit an den HF-Empfänger der dem Kraftfahrzeug zugeordneten Sende-Empfangseinrichtung.

Durch die Versendung von NF-Signalen zum "Wecken" des Transponders ist durch das rasch abnehmende magnetische Feld eine Funktionsradiusbegrenzung vorgegeben. Ein Empfang des ausgesendeten NF-Signales ist lediglich innerhalb eines Funktionsradius von 1,5 bis 2 Metern möglich. Dadurch wird gewährleistet, daß nur diejenigen Transponder von dem betätigten NF-Sender geweckt werden, die sich tatsächlich in diesem Nahfeld befinden. Durch die notwendige Betätigung eines Türgriffes bzw. einer Kofferraumtaste und der Begrenzung des Funktionsradiusses erfolgt eine eindeutige Lokalisierung des Transponders bzw. der den Transponder tragenden Person.

Zum Ermöglichen eines möglichst raschen Entriegelns der jeweiligen Kraftfahrzeugtür werden modifizierte Türgriff- und Schloßmechaniken eingesetzt, die ein sofortiges Aufspringen des Einstieges, an welchem der Griff gezogen wurde, ermöglichen. Selbst durch Vorsehen derartiger Mechaniken ist es nicht möglich, diejenige Zeit, welche die zum Transport der vom NF-Sender zum Transponder übersandten Daten benötigen, abzukürzen. Dies gilt insbesondere wenn auf dieser Niederfrequenzstrecke kompliziert aufgebaute Kryptocodes übermittelt werden sollen, da ein solches Vorgehen aufgrund der geringen Datenübertragungsgeschwindigkeit eine gewisse Zeitdauer in Anspruch nimmt. Das Übermitteln des decodierten Antwortsignales des Transponders an den HF-Empfänger verzögert den Beginn der Türentriegelung dagegen nur geringfügig.

Eine weitere schlüssellose Zugangskontrolleinrichtung für Fahrzeuge ist aus der DE 43 29 697 C2 bekannt. Diese Vorrichtung verwendet einen zentralen NF-Sender zum Aussenden des niederfrequenten Codesignales. Bei dieser Vorrichtung ist jedoch vorgesehen, daß der NF-Sender zyklisch in gewissen Zeitabständen NF-Signale aussendet. Nur wenn sich der dem Kraftfahrzeug zugeordnete Transponder in dem Funktionsradius des NF-Senders befindet, wird dieser geweckt und sendet sein Antwortsignal zurück. Bei dieser Vorrichtung ist es zum Auslösen des Entriegelungsmechanismus nicht notwendig, einen Türgriff oder eine Kofferraumtaste betätigen zu müssen. Da eine Lokalisierung des Transponders zum Entriegeln lediglich bestimmter Türen gemäß dieser Vorrichtung nicht möglich ist, eignet sich diese Zugangskontrolleinrichtung allein für Kraftfahrzeuge mit einer Zentralverriegelung. Auch bei dieser vorbekannten Zugangskontrolleinrichtung erfolgt mitunter eine zeitversetzte Entriegelung bedingt durch die Übertragungsdauer des unter Umständen kompliziert aufgebauten NF-Signales.

Ferner ist eine schlüssellose Zugangskontrolleinrichtung in der EP 0 767 286 A2 beschrieben. Dieses System verwendet einen mobilen HF-Sender, der nach Betätigen einer Sendetaste HF-Signale an eine im Kraftfahrzeug angeordnete HF-Empfangseinheit zum Erkennen einer Zugangsberechtigung und zum anschließenden Öffnen der Fahrzeugtüren sendet. Diesem mobilen Sendeteil ist ferner eine NF-Sende-Empfangseinheit zugeordnet, die mit einer im Kraftfahrzeug angeordneten NF-Sende-Empfangseinheit kommuniziert, wenn das als Schlüssel ausgebildete Sendeteil in ein entsprechendes, im Kraftfahrzeug angeordnetes Schloß - das Zündschloß - eingesetzt wird. Die NF-Kommunikation dient zum Durchführen eines vorbestimmten Dialoges; ferner wird über die NF-Strecke Energie zum Aufladen einer dem Sendeteil zugeordneten Batterie verwendet. Zwar handelt es sich bei dieser Zugangskontrolleinrichtung auch um eine schlüssellose Zugangskontrolleinrichtung, jedoch muß ein berechtigter Benutzer aktiv die Sendetaste betätigen, um sich Zugang zu dem Kraftfahrzeug zu verschaffen. Der Unterschied zu einem üblichen Ausschließen der Türe eines Kraftfahrzeuges besteht somit ausschließlich darin, anstelle der Betätigung eines Schlosses die Sendetaste zu betätigen.

Ausgehend von dem eingangs diskutierten Stand der Technik liegt der Erfindung daher die Aufgabe zugrunde, eine schlüssellose Zugangskontrolleinrichtung für Kraftfahrzeuge sowie ein Verfahren zum Durchführen einer schlüssellosen Zugangsberechtigungskontrolle bei Kraftfahrzeugen vorzuschlagen, die nicht nur zum Entriegeln einzelner Türen oder Klappen geeignet ist, sondern mit der auch ein Austausch kompliziert aufgebauter Code- und Antwortsignale, ohne eine spürbare Verzögerung des Entriegelungsvorganges in Kauf nehmen zu müssen, gewährleistet ist.

Diese Aufgabe wird durch den gegenstand des Anspruchs 1 gelöst.

Ferner wird diese Aufgabe erfindungsgemäß durch ein Verfahren gemäß Anspruch 15 zum Durchführen einer schlüssellosen Zugangsberechtigungskontrolle bei Kraftfahrzeugen gelöst.

Das Aussenden von unterschiedlichen, jedem NF-Sender zuordnenbaren NF-Signalen, welches Signal von dem Transponder empfangen und den jeweiligen NF-Sender identifizierend in einem Antwortcode an die im Kraftfahrzeug befindliche Sende-Empfangseinrichtung zurückgesendet wird, ermöglicht eine Lokalisierung des Transponders bzw. der den Transponder tragenden Person, ohne daß ein am Kraftfahrzeug befindlicher Türgriff oder dgl. betätigt werden muß. Die Lokalisierung des Transponders erfolgt somit in denjenigem Zeitpunkt, in welchem dieser in den Funktionsradius eines NF-Senders eingebracht wird. Das NF-Signal dient lediglich dem sogenannten "Wecken" des Transponders, wobei als Wecksignal das jedem NF-Sender spezifische NF-Signal verwendet wird. Das zu übertragende Signal bzw. die zu übertragende Datenmenge kann somit auf ein Minimum reduziert sein.

Der Frage-Antwort-Dialog zwischen der dem Kraftfahrzeug zugeordneten Sende-Empfangseinrichtung und dem Transponder zum Abfragen der Zugangsberechtigung erfolgt auf einer HF-Strecke, wobei sowohl die im Kraftfahrzeug befindliche Sende-Empfangseinrichtung sowie der Transponder eine HF-Sende-Empfangseinheit aufweist. Durch Verwendung einer HF-Strecke zum Übermitteln der eigentlichen, zur Identifizierung vorgesehenen Signale ist es möglich, auch kompliziert aufgebaute Kryptocodes zwischen den beiden Einheiten zu übersenden, ohne daß dieses für einen Benutzer spürbar zu einer Verzögerung des Entriegelungsmechanismus führt. Diese Maßnahme erhöht maßgeblich die Systemsicherheit. Diese wird auch dadurch erhöht, daß der Frage-Antwort-Dialog auf der HF-Strecke nur dann stattfindet, wenn sich der Transponder im Funktionsradius eines NF-Senders befindet und somit induktiv an diesen gekoppelt ist. Es ist vorgesehen, daß bei Verlassen des Funktionsradius der Frage-Antwort-Dialog abbricht, ohne daß eine Entriegelung stattgefunden hat.

Da die Lokalisierung des Transponders und der zur Identifizierung des Transponders notwendige Frage-Antwort-Dialog bereits einsetzt, wenn der Transponder in den Funktionsradius eines NF-Senders gebracht wird, beispielsweise durch Heranschreiten eines Benutzers an sein Kraftfahrzeug, wird die verbleibende Zeit, bis der Benutzer tatsächlich an eine Fahrzeugtüre angelangt ist, genutzt, um das Identifizierungsverfahren durchzuführen. Einen Funktionsradius des NF-Senders von 1,5 m und eine Näherungsbewegung von 1 m/s vorausgesetzt könnten theoretisch 1,5 Sekunden für die Identifizierung einschließlich der Entriegelung der jeweiligen Tür benötigt werden. Diese Zeit ist mehr als ausreichend, um selbst kompliziert aufgebaute Kryptocodes in einem Frage-Antwort-Dialog über die HF-Strecke übertragen zu können.

Der berechtigte Benutzer findet somit immer eine geöffnete Türe vor, wenn er sich am Fahrzeug befindet.

Die Codierung der NF-Signale der einzelnen NF-Sender kann beispielsweise über unterschiedliche Zeitschlitze erfolgen. Dabei ist vorgesehen, daß alle NF-Sender ein gleiches NF-Signal aussenden, wobei in einem bestimmten Zeitintervall jeweils nur ein NF-Sender sein Signal aussendet, woran sich eine definierte Pause anschließt, bevor ein zweiter NF-Sender sein Signal aussendet. Diese Abfolge wiederholt sich über die Anzahl der verwendeten NF-Sender zyklisch. Wird zeitnah zu dem NF-Signal eines NF-Senders ein Antwortsignal des Transponders empfangen, ist die Zuordnung des empfangenen Antwortsignales zu demjenigen NF-Sender möglich, der zuletzt ein NF-Sender ausgesendet hat. Dabei kann vorgesehen sein, daß nach Empfang eines Anwortsignales von den übrigen NF-Sendern zunächst keine weiteren NF-Signale ausgesendet werden. Dagegen wird zur Kontrolle der Lokalisierung derjenige NF-Sender, dem das Antwortsignal zugeordnet worden ist, erneut NF-Signale aussenden.

In einer weiteren Ausgestaltung ist vorgesehen, daß die NF-Signale der einzelnen NF-Sender einen unterschiedlichen Code aufweisen, so daß eine codeabhängige Lokalisierung erfolgt.

Bei zyklisch ausgesendeten NF-Signalen kann vorgesehen sein, daß die HF-Sende-Empfangseinheit beim Aussenden des NF-Codesignales gestartet wird und nach einer bestimmten Delay-Zeit wieder heruntergefahren wird, wenn zwischenzeitlich kein Antwortsignal empfangen worden ist.

Der NF-Frequenzbereich befindet sich zweckmäßigerweise zwischen 1 und 135 kHz und liegt insbesondere zwischen 1 und 25 kHz. Es hat sich gezeigt, daß die niedrigfrequenten Sendefrequenzen insbesondere im Hinblick auf störende Einflüsse der Kraftfahrzeugkarosserie unempfindlicher sind. Liegen die Übertragungsfrequenzen über 135 kHz kann sich die Fahrzeugkarosserie sehr ungünstig auf den Funktionsradius der NF-Sender auswirken. Der HF-Frequenzbereich liegt zweckmäßigerweise zwischen 100 MHz und 10 GHz.

In einer weiteren Ausgestaltung ist vorgesehen, daß die dem Kraftfahrzeug zugeordnete Sende-Empfangseinrichtung eine der Anzahl der NF-Sender entsprechende Anzahl an Richtantennen zum gerichteten Empfang der HF-Antwort-Signale eines Transponders aufweist, wobei die Richtantennen in diejenige Richtung gerichtet sind, in welche die NF-Sender von dem Kraftfahrzeug wegsenden. Mit einer solchen Maßnahme ist eine doppelte Lokalisierung des Transponders möglich, wobei eine erste Lokalisierung über die NF-Sender und eine weitere Lokalisierung über die Empfangsrichtung des HF-Antwort-Signales erfolgt.

Weitere Vorteile der Erfindung ergeben sich aus den übrigen Unteransprüchen sowie aus der nachfolgenden Beschreibung eines bevorzugten Ausführungsbeispieles. Es zeigen:
- **Fig. 1:**: eine schematisierte Darstellung einer schlüssellosen Zugangskontrolleinrichtung für Kraftfahrzeuge,
- **Fig. 2:**: ein Flußdiagramm eines Frage-Antwort-Dialoges zur Identifizierung der Zugangsberechtigung zwischen einer in einem Kraftfahrzeug angeordneten Sende-Empfangseinrichtung und einem mobilen Transponder,
- **Fig. 3:**: ein schematisiertes Blockschaltbild eines Transponders zur Verwendung in einer schlüssellosen Zugangskontrolleinrichtung für Kraftfahrzeuge.

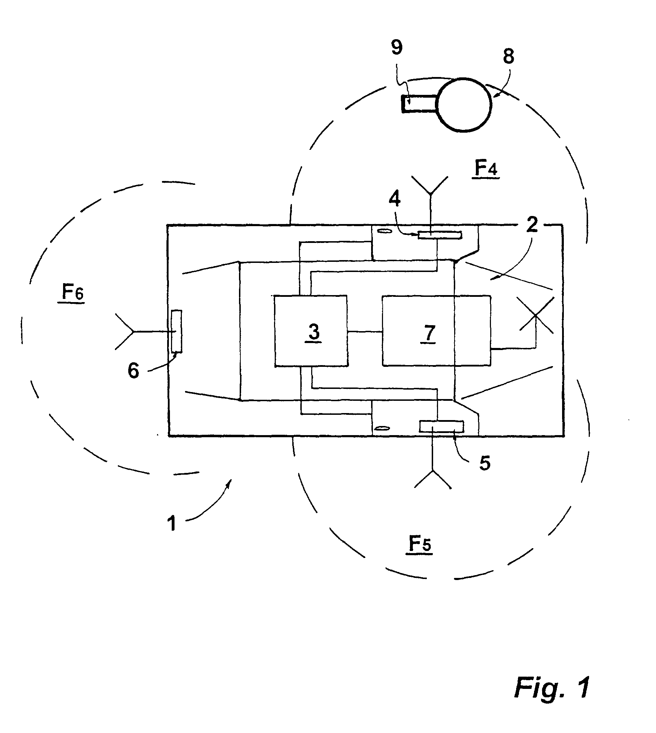

In Figur 1 ist schematisiert ein Kraftfahrzeug 1 dargestellt, welches mit einer schlüssellosen Zugangskontrolleinrichtung ausgestattet ist. Die Zugangskontrolleinrichtung besteht aus einer im Kraftfahrzeug 1 angeordneten Sende-Empfangseinrichtung 2, die an eine Steuereinheit 3 angeschlossen ist. Die Sende- und Empfangseinrichtung 2 umfaßt drei im induktiven Frequenzbereich arbeitende Sender (NF-Sender) 4, 5, 6 sowie eine HF-Sende-Empfangseinheit 7. Die NF-Sender 4, 5, 6 sind bestimmten Kraftfahrzeugtüren zugeordnet, wobei der NF-Sender 4 der Fahrertüre, der NF-Sender 5 der Beifahrertüre und der NF-Sender 6 der Heckklappe des Kraftfahrzeuges 1 zugeordnet sind. Die Antennen der NF-Sender 4, 5 ,6 sind so angeordnet, daß ein möglichst ungehindertes Abstrahlen von NF-Signalen vom Kraftfahrzeug 1 weg möglich ist. Die Antennen können daher in dem Dichtungssystem der jeweiligen Fenster oder Türen enthalten sein oder sich beispielsweise hinter dem Spiegelglas der Außenspiegel befinden. Die NF-Sender 4, 5, 6 sind mit entsprechenden Steuerleitungen mit der Steuereinheit 3 verbunden. Die NF-Sender 4, 5, 6 dienen zum Aussenden von NF-Codesignalen, die so ausgestaltet sind, daß sich das NF-Codesignal eines NF-Senders 4, 5 oder 6 von den NF-Codesignalen der übrigen NF-Sender 4, 5 bzw. 6 unterscheidet. Zweckmäßigerweise wird zum Aussenden der NF-Codesignale eine Frequenz zwischen 1 und 25 kHz gewählt. Durch entsprechende Ausgestaltung der Antenne ist es möglich, weitestgehend den magnetischen Anteil der elektromagnetischen Wellen zu benutzen; diese werden in dem genannten Frequenzbereich weder vom menschlichen Körper noch der Fahrzeugkarosserie wesentlich gedämpft. Die Intensität des NF-Signales ist so bemessen, daß jeder NF-Sender einen Funktionsradius F₄, F₅, F₆ von etwa 1,5 m aufweist.

Die Sende-Empfangseinheit 7 dient zum Empfang eines HF-Antwort-Signales sowie zum Durchführen eines Frage-Antwort-Dialoges mit einem mobilen Transponder 8. Der Transponder 8 umfaßt einen NF-Empfänger, dessen Antenne eine Ferritkernantenne 9 ist. Der NF-Empfänger dient zum Empfangen von NF-Codesignalen der Sende-Empfangseinrichtung 2. Der NF-Empfänger des Transponders 8 ist mit seinem Ausgang an den Eingang eines Mikroprozessors angeschlossen, durch den nach Empfang eines NF-Signales eine den Transponder 8 zugeordnete HF-Sende-Empfangseinheit gestartet wird. Ferner dient der Prozessor zum Einbringen des empfangenen NF-Codesignales, welches einem bestimmten NF-Sender 4, 5 oder 6 zugeordnet ist, in ein von der HF-Sende-Empfangseinheit des Transponders 8 an die Sende-Empfangseinrichtung 2 im Kraftfahrzeug 1 zu übermittelndes Antwort-Signal. Zur Spannungsversorgung enthält der Transponder 8 eine nicht näher dargestellte wiederaufladbare Batterie, beispielsweise eine Lithium-lonen Batterie.

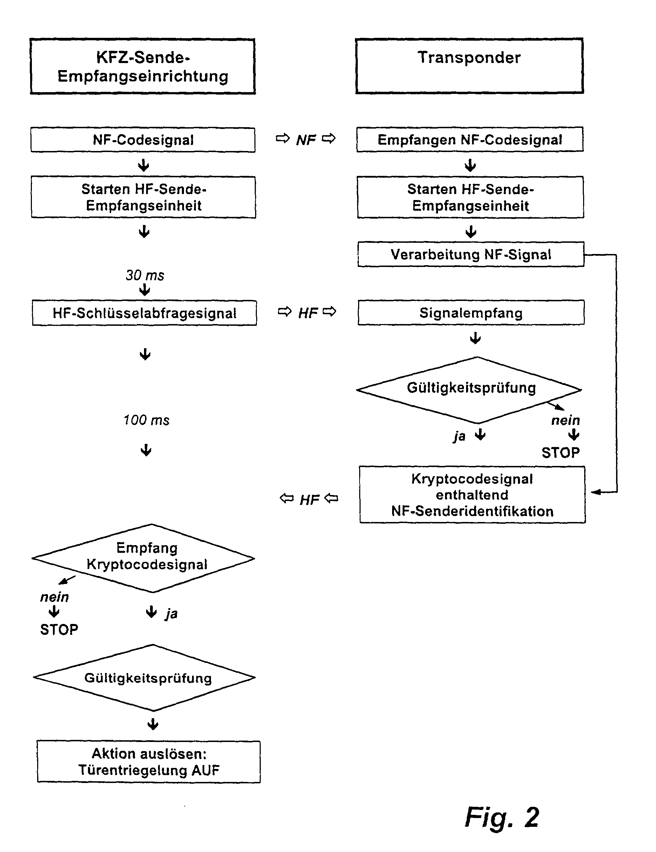

Eine schlüssellose Zugangsberechtigungskontrolle gemäß der in Figur 1 dargestellten Zugangskontrolleinrichtung funktioniert wie folgt, wobei auf das Flußdiagramm der Figur 2 Bezug genommen ist:

Die NF-Sender 4, 5, 6 senden zyklisch und zeitversetzt ein codiertes NF-Signal aus. Die Codierung des jeweils ausgesendeten NF-Signales dient zur Identifizierung des das NF-Signal aussendenden NF-Senders 4, 5 oder 6. Ferner dient das NF-Codesignal zum "Wecken" des Transponders 8. Bei dem in Figur 1 dargestellten Ausführungsbeispiel sind drei NF-Sender 4, 5, 6 vorgesehen, so daß die in einem NF-Codesignal enthaltene Datenmenge lediglich so groß sein muß, daß diese zur eindeutigen Identifizierung eines NF-Senders 4, 5 oder 6 ausreicht. Zu diesem Zweck besteht das NF-Codesignal des NF-Senders 4 aus dem Binärcode [01], das NF-Codesignal des NF-Senders 5 aus dem Binärcode [10] und das NF-Codesignal des NF-Senders 6 aus dem Binärcode [11].

Von dem sich dem Kraftfahrzeug 1 nähernden Transponder 8, den eine berechtigte Person beispielsweise in der Jackentasche trägt, wird nun in Abhängigkeit von derjenigen Seite, der sich diese Person dem Kraftfahrzeug 1 nähert, ein für diese Seite charakteristisches NF-Codesignal empfangen. Bei einem Annähem an die Fahrertür wird der Binärcode [01] des NF-Codesignales des NF-Senders 4 beim Eintritt in den Funktionsradius F₄ empfangen. Zu diesem Zeitpunkt befindet sich die berechtigte Person noch in einem Abstand von etwa 1,5 m von der Fahrertüre.

Der Transponder 8 erkennt das NF-Codesignal und startet die ihm zugeordnete HF-Sende-Empfangseinheit. Gleichzeitig wird das empfangene NF-Codesignal derart in dem dem Transponder 8 zugeordneten Prozessor verrechnet, daß dieses in ein HF-Antwort-Signal inkorporiert wird.

Gleichzeitig mit dem zyklischen Aussenden des NF-Codesignales wird die HF-Sende-Empfangseinheit 7 der im Kraftfahrzeug 1 angeordneten Sende-Empfangseinrichtung 2 gestartet. Nach einer vorbestimmten Delay-Zeit, die etwa 30 ms betragen kann, wird von der Sende-Empfangseinrichtung 7 ein Schlüsselabfragesignal an die im Transponder 8 befindliche HF-Sende-Empfangseinheit (13) übersandt. Die Delay-Zeit ist vorgesehen, damit das Schlüsselabfragesignal erst dann ausgesendet wird, wenn die HF-Sende-Empfangseinheit des Transponders 8 gestartet und eingeschwungen ist. Das Schlüsselabfragesignal dient zur Einleitung des HF-Antwort-Frage-Dialoges zwischen der Sende-Empfangseinrichtung 2 und dem Transponder 8. Mit dieser ersten Abfrage erfolgt eine Abfrage, um welchen "Schlüssel" es sich bei dem Transponder 8 handelt. Diese Grobabfrage ist vorgesehen, um bereits zu Beginn des Frage-Antwort-Dialoges festzustellen, ob der Transponder 8 überhaupt zur Gruppe der möglichen Berechtigten gehören kann und/oder zur Initialisierung des Abfrageschlüssels. Das Schlüsselabfragesignal beinhaltet somit lediglich eine Kurzinformation, die nur eine geringe Datenübertragungsmenge beinhaltet. Dadurch ist sichergestellt, daß eine eigentliche Übermittlung von Kryptocodes nur dann erfolgt, wenn zuvor zumindest erkannt worden ist, daß der Transponder 8 zur Gruppe der möglicherweise Berechtigten gehört.

Dieses Schlüsselabfragesignal wird von der HF-Sende-Empfangseinheit (13) des Transponders 8 empfangen und daraufhin überprüft, ob die empfangene Kurzinformation dem dem Transponder 8 zugeordneten Kraftfahrzeug 1 zugehörig ist. Für den Fall, daß eine Zuordnung nicht festgestellt wird, wird die HF-Sende-Empfangseinheit des Transponders 8 wieder heruntergefahren. Erkennt der Transponder 8 dagegen, daß das empfangene Kurzinformationssignal das richtige ist, sendet dieser auf der HF-Strecke einen Kryptocode an die Sende-Empfangseinrichtung 2 des Kraftfahrzeuges 1. Dieses Antwort-Signal enthält auch einen Code zur Identifizierung desjenigen NF-Senders 4, 5 oder 6 von dem das empfangene NF-Codesignal ausgesendet worden ist. Durch Zurücksenden dieses Lokalisierungssignales und durch Empfang desselben mittels der HF-Sende-Empfangseinheit 7 kann über die Steuereinheit 3 derjenige Entriegelungsmechanismus betätigt werden, dem derjenige NF-Sender 4, 5 oder 6 entspricht, dessen Signal zuvor empfangen worden ist. Der Austausch von Kryptocodesignalen auf der HF-Strecke kann mehrfach erfolgen.

Das von der HF-Sende-Empfangseinheit 7 empfangene Antwortsignal des Transponders 8 wird entschlüsselt und mit einem Sollwert oder mit mehreren Sollwerten verglichen, woraufhin die Zugangsberechtigung der den Transponder tragenden Person festgestellt wird. Bei Empfang eines gültigen Antwort-Code-Signales erfolgt durch die Steuereinheit 3 ein in diesem Ausführungsbeispiel an die Fahrertür gerichtetes Auslösesignal zum Entriegeln derselben.

Für den Fall, daß nach Aussenden des Schlüsselabfragesignales durch die HF-Sende-Empfangseinheit 7 innerhalb einer vorgegebenen Zeitspanne, etwa 100 ms kein Antwortsignal eines Transponders empfangen worden ist, wird der Frage-Antwort-Dialog beendet und die HF-Sende-Empfangseinheit 7 heruntergefahren. Durch das zyklische Aussenden von NF-Codesignalen und das gleichermaßen zyklische Herauf- und Herunterfahren der HF-Sende-Empfangseinheit ist der Stromverbrauch auf ein Minimum gesenkt.

Die verbleibende Zeit zwischen Eintritt des Transponders 8 in den Funktionsradius F₄ des der Fahrertür zugeordneten NF-Senders 4 bis zum Herantreten der berechtigten Person an die Fahrertüre, welches etwa zwei Schritten bedarf, ist ausreichend, damit der gesamte Frage-Antwort-Dialog einschließlich eines "Weckens" des Transponders 8 durchgeführt worden ist und die Fahrertüre entriegelt ist. Der Berechtigte kann dann sofort in sein Kraftfahrzeug 1 einsteigen.

In dem Kraftfahrzeug 1 ist an geeigneter Stelle eine Transponderaufnahme angeordnet, in die der Transponder 8 mit seiner Ferritkemantenne 9 einsetzbar ist. Dieser Transponderaufnahme ist eine induktive Ladeeinrichtung zugeordnet, so daß die wiederaufladbare Batterie des Transponders 8 beim Benutzen des Kraftfahrzeuges 1 aufgeladen wird. Der Transponderaufnahme ist darüber hinaus eine weitere Einrichtung zum Durchführen von Frage-Antwort-Dialogen zugeordnet, die entsprechend dem oben beschriebenen Frage-Antwort-Dialog ablaufen, jedoch mit dem Ziel, um nunmehr eine Wegfahrsperre auszuschalten und/oder andere Sicherheits- oder Betriebszustände abzufragen bzw. zu starten.

Durch Empfangen des NF-Codesignales eines NF-Senders 4, 5 oder 6 ist der Transponder 8 geweckt worden und hat daraufhin die ihm zugeordnete HF-Sende-Empfangseinheit gestartet sowie das NF-Codesignal hinsichtlich der darin enthaltenen NF-Senderidentifikation verarbeitet. Es besteht auch die Möglichkeit, den Transponder 8 so auszubilden, daß dieser bei einem Empfang mehrerer NF-Codesignale von unterschiedlichen NF-Codesendern - je nach Ausgestaltung entweder zeitgleich oder zeitversetzt - andere Funktionen startet. Ein Empfang mehrerer NF-Codesignalen von mehreren NF-Sendern findet immer dann statt, wenn die berechtigte Person sich mit dem Transponder 8 im Kraftfahrzeug 1 befindet. Anstelle eines Einsteckens des Transponders 8 in eine entsprechende Transponderaufnahme könnte vorgesehen sein, daß bei einem solchen Empfang als weitere Steuerungsfunktion die Wegfahrsperre ausgeschaltet wird.

Beim Verlassen des Kraftfahrzeuges 1 wird der Transponder 8 eingesteckt und mitgenommen. Dabei erfolgt die Verriegelung der Kraftfahrzeugtüren bzw. der Kraftfahrzeugtür 4, wie im dargestellten Ausführungsbeispiel erläutert, selbsttätig. Die HF-Strecke zwischen der HF-Sende-Empfangseinheit 7 und der HF-Sende-Empfangseinheit des Transponders 8 wird zur Durchführung eines Frage-Antwort-Dialoges betreffend das Verlassen des Kraftfahrzeuges 1 durchgeführt. Eine induktive Kopplung ist für diesen Frage-Antwort-Dialog nicht notwendig, da zuvor erkannt worden ist, daß der Transponder 8 bzw. die ausgestiegene Person berechtigt ist. Dabei ist vorgesehen, daß die Sendeleistungen der HF-Sende- und Empfangseinheiten 7 zunächst mit einer relativ geringen Sendeleistung sendet, da sich die berechtigte Person unmittelbar nach Verlassen des Kraftfahrzeuges noch in unmittelbarer Kraftfahrzeugnähe befindet. Mit der Entfernungsbewegung der Person werden dann die Sendeleistungen nachgeregelt, so lange bis der vorgesehene Frage-Antwort-Dialog beendet ist. Dieses kann auch weit außerhalb des jeweiligen Funktionsbereiches F₄, F₅ und F₆ sein und mehrere 10'er Meter betragen. In diesem Frage-Antwort-Dialog ist auch ein Verriegelungssignal enthalten, mit welchem der berechtigten Person angezeigt wird, daß das Kraftfahrzeug 1 tatsächlich verschlossen ist. Dieses Signal kann entweder eine Leuchtanzeige 10 am Transponder 8 oder ein akustisches Signal sein. Ferner besteht die Möglichkeit, dieses Signal zu speichern und auf Abruf dem Benutzer zur Kenntnis zu bringen.

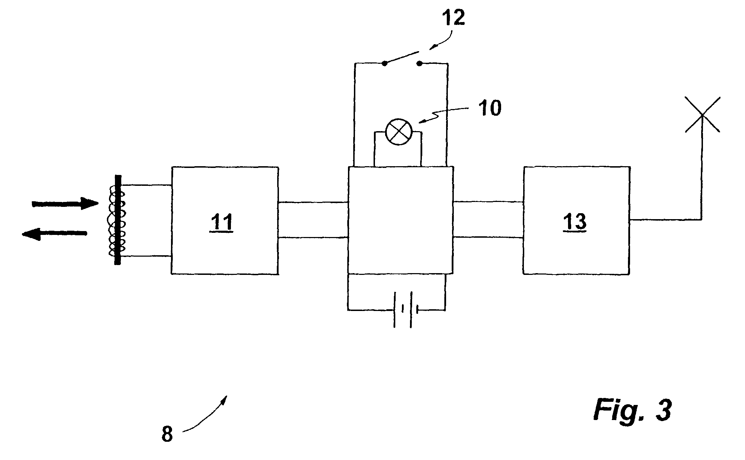

Schematisiert ist das Blockschaltbild des Transponders 8 in Figur 3 dargestellt. Aus dieser Figur wird ersichtlich, daß über die NF-Strecke ein Empfang, hier: des Wecksignales, ein Datenempfang oder auch ein Energieempfang über den NF-Empfänger 11 möglich ist. Durch die Pfeilandeutung wird erkennbar, daß der Transponder 8 die NF-Strecke ebenfalls zum Aussenden etwa von Daten verwenden kann.

Dem Transponder 8 ist ferner eine manuell bedienbare HF-Sendetaste 12 zugeordnet, bei deren Betätigung über die dem Transponder 8 zugeordneten HF-Sende-Empfangseinheit 13 über die HF-Strecke der HF-Sende-Empfangseinheit 7 im Kraftfahrzeug 1 ein Signal übermittelbar ist. Eine derartige Funktion des Transponders 8 kann beispielsweise verwendet werden, um aus einer größeren Entfernung dem Kraftfahrzeug ein Signal zu übermitteln, woraufhin dieses sich in irgendeiner Weise bemerkbar macht, etwa durch Anschalten der Innenbeleuchtung, durch Hupen oder durch Anspringen der Alarmanlage. Mit einer solchen Möglichkeit läßt sich das eigene Auto auf Großparkplätzen besonders leicht wieder auffinden. Mit diesem Signal oder in einem weiteren Signal könnte das Kraftfahrzeug auf diese Weise ebenfalls entriegelt werden. In einem solchen Fall kann auch die Berechtigungs- bzw. Identifizierungsabfrage durch das HF-Signal durch Betätigen der HF-Sendetaste 12 ausgelöst werden. Im Unterschied zu der zuvor beschriebenen Funktionsweise des Transponders ist bei Verwendung der HF-Sendetaste ein Tätigwerden des berechtigten Benutzers erforderlich.

### Zusammenstellung der Bezugszeichen

- 1: Kraftfahrzeug
- 2: Sende-Empfangseinrichtung
- 3: Steuereinheit
- 4: NF-Sender
- 5: NF-Sender
- 6: NF-Sender
- 7: Sende-Empfangseinheit
- 8: Transponder
- 9: Stabantenne
- 10: Leuchtanzeige
- 11: NF-Empfänger
- 12: HF-Sendetaste
- 13: HF-Sende-Empfangseinheit

- F₄: Funktionsradius
- F₅: Funktionsradius
- F₆: Funktionsradius

## Patentansprüche

1. Schlüssellose Zugangskontrolleinrichtung für Kraftfahrzeuge mit einer dem Kraftfahrzeug (1) zugeordneten Sende-Empfangseinrichtung (2) und mit mindestens einem mobilen Transponder (8), welche Sende-Empfangseinrichtung (2) einen im induktiven Frequenzbereich arbeitenden Sender zum Senden eines niederfrequenten Signales und einen im Hochfrequenzbereich arbeitenden HF-Empfänger zum Empfangen von HF-Antwortsignalen des Transponders (8) umfaßt und welcher Transponder (8) einen Empfänger zum Empfangen des NF-Signales und einen HF-Sender zum Senden eines HF-Antwortsignales nach Empfang des NF-Signales umfaßt, **dadurch gekennzeichnet, daß** der Sende-Empfangseinrichtung (2) insgesamt mehrere NF-Sender (4, 5, 6) zum Senden niederfrequenter Signale zugeordnet sind, wobei jeder NF-Sender (4, 5, 6) einer Seite des Kraftfahrzeugs (1) und jedem NF-Sender (4, 5, 6) ein sich von den anderen NF-Sendern (4, 5, 6) unterscheidbares, zu sendendes NF-Signal zugeordnet ist, und daß der Sende-Empfangseinrichtung (2) ein HF-Sender und dem Transponder (8) ein HF-Empfänger zugeordnet sind, so daß sowohl die Sende-Empfangseinrichtung (2) als auch der Transponder (8) eine HF-Sende-Empfangseinheit (7 bzw. 13) aufweisen, damit ein die Zugangsberechtigung überprüfender bidirektionaler Frage-Antwort-Dialog auf der HF-Strecke zwischen der kraftfahrzeugseitigen Sende-Empfangseinrichtung (2) und dem Transponder (8) durchführbar ist, wobei zumindest ein HF-Antwortsignal des Transponders (8) nach Empfang eines von einem NF-Sender (4, 5, 6) gesendeten NF-Signals einen den jeweiligen NF-Sender (4, 5, 6) identifizierenden Antwortcode zur Ortung des Transponders (8) durch die Sende-Empfangseinrichtung (2) enthält.

2. Zugangskontrolleinrichtung nach Anspruch 1, **dadurch gekennzeichnet, daß** die NF-Signale der NF-Sender (4, 5, 6) Zeitschlitzcodiert sind, so daß die NF-Signale eines NF-Senders (4, 5, 6) zyklisch gesendet werden, wobei in einen bestimmten Zeitintervall jeweils von nur einem NF-Sender ein NF-Signal gesendet wird.

3. Zugangskontrolleinrichtung nach Anspruch 1 oder 2, **dadurch gekennzeichnet, daß** die NF-Signale der einzelnen NF-Sender (4, 5, 6) einen unterschiedlichen Code aufweisen.

4. Zugangskontrolleinrichtung nach Anspruch 1, **dadurch gekennzeichnet, daß** die übermittelten NF-Signale und/oder HF-Signale phasensynchron sind.

5. Zugangskontrolleinrichtung nach einem der Ansprüche 1 bis 4, **dadurch gekennzeichnet, daß** der NF-Frequenzbereich zwischen 1 kHz und 135 kHz, insbesondere zwischen 1 kHz und 25 kHz liegt.

6. Zugangskontrolleinrichtung nach einem der Ansprüche 1 bis 5, **dadurch gekennzeichnet, daß** der HF-Frequenzbereich zwischen 1 MHz und 10 GHz liegt.

7. Zugangskontrolleinrichtung nach einem der Ansprüche 1 bis 6, **dadurch gekennzeichnet, daß** einer einem Kraftfahrzeug (1) zugeordneten Sende-Empfangseinrichtung (2) mehrere Transponder (8) zugeordnet sind, die mit Hilfe eines Antikollisionsprotokolls gleichzeitig erkennbar sind.

8. Zugangskontrolleinrichtung nach einem der Ansprüche 1 bis 7, **dadurch gekennzeichnet, daß** die Sende-Empfangseinrichtung (2) eine der Anzahl der NF-Sender (4, 5, 6) entsprechende Anzahl an Richtantennen zum gerichteten Empfang der HF-Antwortsignale eines Transponders (8) aufweist, wobei die Richtantennen in diejenige Richtung gerichtet sind, in welche die NF-Sender (4, 5, 6) von dem Kraftfahrzeug (1) wegsenden.

9. Zugangskontrolleinrichtung nach einem der Ansprüche 1 bis 8, **dadurch gekennzeichnet**, die NF-Empfangsspule des Transponders (8) zum Laden der dem Transponder (8) zugeordneten Batterie vorgesehen ist.

10. Zugangskontrolleinrichtung nach einem der Ansprüche 1 bis 9, **dadurch gekennzeichnet, daß** im Innenraum des Kraftfahrzeuges (1) eine Transponderaufnahme angeordnet ist, in welche ein Transponder (8) einsetzbar ist und der eine induktive Ladeeinrichtung zum Aufladen der Batterie des Transponders (8) unter Verwendung des NF-Empfängers des Transponders (8) zugeordnet ist.

11. Zugangskontrolleinrichtung nach Anspruch 10, **dadurch gekennzeichnet, daß** der Transponderaufnahme eine Einrichtung zum Durchführen weiterer Frage-Antwort-Dialoge zugeordnet ist.

12. Zugangskontrolleinrichtung nach einem der Ansprüche 1 bis 11, **dadurch gekennzeichnet, daß** als Antenne für den Transponder (8) eine Ferritkernantenne (9) vorgesehen ist.

13. Zugangskontrolleinrichtung nach einem der Ansprüche 1 bis 11, **dadurch gekennzeichnet, daß** als Antenne für den Transponder (8) eine Luftspule vorgesehen ist.

14. Zugangskontrolleinrichtung nach einem der Ansprüche 1 bis 13, **dadurch gekennzeichnet, daß** dem Transponder (8) eine manuell betätigbare HF-Sendetaste zum Übersenden eines Signales über die HF-Strecke an die dem Kraftfahrzeug (1) zugeordnete HF-Sende-Empfangseinheit (7) umfaßt.

15. Verfahren zum Durchführen einer schlüssellosen Zugangsberechtigungskontrolle bei Kraftfahrzeugen umfassend die folgenden Schritte:
- Aussenden codierter NF-Signale, die im induktiven Frequenzbereich liegen, durch eine kraftfahrzeugseitige Sende-Empfangseinrichtung (2),
- Empfangen und Erkennen des NF-Signales mit mindestens einem Transponder (8) und
- Zurücksenden eines Antwortsignals von dem Transponder (8) an die Sende-Empfangseinrichtung (2) auf einer HF-Funkstrecke,
**gekennzeichnet durch,**
- kraftfahrzeugseitiges Senden von mehreren unterschiedlichen, jeweils einer Kraftfahrzeugseite zugeordneten NF-Signalen,
- Durchführen eines bidirektionalen Frage-Antwort-Dialoges auf einer HF-Strecke zwischen einer HF-Sende-Empfangseinheit (7) des Kraftfahrzeuges (1) und einer HF-Sende-Empfangseinheit (13) des Transponders (8), welcher Dialog das Senden eines den jeweiligen NF-Sender (4, 5, 6), von dem das NF-Signal **durch** den Transponder (8) empfangen worden ist, identifizierenden, kryptisch codierten Antwortsignals **durch** den Transponder (8),
- Erkennen und Auswerten des Kryptocodes **durch** die Sende-Empfangseinrichtung (2) im Hinblick auf die darin enthaltene NF-Senderidentifikation und
- Öffnen einer oder mehrerer Türverriegelungen, die derjenigen Türe oder denjenigen Türen entsprechen, die der von dem Transponder (8) zurückgesendeten Senderidentifikation entsprechen.

16. Verfahren nach Anspruch 15, **dadurch gekennzeichnet, daß** die NF-Signale wechselweise zyklisch ausgesendet werden, so daß die Codierung der NF-Sender Zeitschlitz-gesteuert ist.

17. Verfahren nach Anspruch 15 oder 16, **dadurch gekennzeichnet, daß** jeder NF-Sender ein sich bezüglich seines Codes von den Signalen der übrigen NF-Sender unterschiedliches NF-Signal aussendet.

18. Verfahren nach einem der Ansprüche 15 bis 17, **dadurch gekennzeichnet, daß** der Frage-Antwort-Dialog auf der HF-Strecke durch ein von der HF-Sende-Empfangseinheit der im Kraftfahrzeug befindlichen Sende-Empfangseinrichtung ausgesendetes Schlüsselabfragesignal beginnt, welches im Transponder auf seine Gültigkeit hin überprüft wird.

19. Verfahren nach einem der Ansprüche 15 bis 18, **dadurch gekennzeichnet, daß** nach einem Öffnen der Verriegelungen der entsprechenden Tür(en) des Kraftfahrzeuges und einem Einsteigen der als berechtigt erkannten Personen mit dem oder den Transpondern in das Kraftfahrzeug einer oder mehrere weitere Frage-Antwort-Dialoge zwischen der Sende-Empfangseinrichtung und dem Transponder durchgeführt werden.

20. Verfahren nach einem der Ansprüche 14 bis 18, **dadurch gekennzeichnet, daß** der Transponder (8) beim Empfang mehrerer NF-Signale unterschiedlicher NF-Sender (4, 5, 6) vorbestimmte Steuerfunktionen im Kraftfahrzeug (1) übemimmt.

## Claims

1. Keyless device for controlling access to automotive vehicles, said device having a transmitting-and-receiving device (2) associated with the vehicle (1) and at least one mobile transponder (8), said transmitting-and-receiving device (2) having a transmitter operating in the inductive frequency range to transmit a low-frequency signal and a HF-receiver operating in the high-frequency range to receive HF answer signals from the transponder (8), and said transponder (8) including a receiver for receiving the LF-signal and a HF-transmitter for transmitting a HF answer signal after receiving the LF-signal, **characterised in that** altogether a plurality of LF-transmitters (4,5,6) for transmitting low-frequency signals are associated altogether with the transmitting-and-receiving device (2), each LF-transmitter (4,5,6) being associated with one side of the automotive vehicle (1) and a LF-signal to be transmitted, which is distinguishable from that of the other LF-transmitters (4,5,6), being associated with each LF-transmitter (4,5,6), and **in that** a HF-transmitter is associated with the transmitting-and-receiving device (2) and a HF-receiver with the transponder (8), such that both the sending-and-receiving device (2) and the transponder (8) have a HF transmitting-and-receiving unit (7 or 13 respectively), so that a bidirectional question/answer dialogue checking access authorisation can be carried out on the HF-path between the transmitting-and-receiving device (2) on the vehicle and the transponder (8), at least one HF answer signal of the transponder (8) containing, after the reception of a LF-signal transmitted by a LF-transmitter (4,5,6), an answer code identifying the respective LF-transmitter (4,5,6) to locate the transponder (8) by means of the transmitting-and-receiving device (2).

2. Access control device according to claim 1, **characterised in that** the LF-signals of the LF-transmitters (4,5,6) are time-slot-coded, such that the LF-signals of a LF-transmitter (4,5,6) are transmitted cyclically, in each case a LF-signal being transmitted from only one LF-transmitter in a specific time interval.

3. Access control device according to claim 1 or 2, **characterised in that** the LF-signals of the individual LF-transmitters (4,5,6) have a different code.

4. Access control device according to claim 1, **characterised in that** the transmitted LF-signals and/or HF-signals are phase-locked.

5. Access control device according to one of claims 1 to 4, **characterised in that** the LF frequency range is between 1 kHz and 135 kHz, more especially between 1 kHz and 25 kHz.

6. Access control device according to one of claims 1 to 5, **characterised in that** the HF frequency range is between 1 MHz and 10 GHz.

7. Access control device according to one of claims 1 to 6, **characterised in that** a plurality of transponders (8) are associated with a transmitting-and-receiving device, which is associated with an automotive vehicle (1), said transponders being simultaneously recognisable with the aid of an anticollision protocol.

8. Access control device according to one of claims 1 to 7, **characterised in that** the transmitting-and receiving device (2) has a number of directional antennae corresponding to the number of LF-transmitters (4,5,6) for the directional reception of the HF answer signals of a transponder (8), the directional antennae being directed in the direction in which the LF-transmitters (4,5,6) transmit away from the automotive vehicle (1).

9. Access control device according to one of claims 1 to 8, **characterised in that** the LF receiving coil of the transponder (8) is provided to charge the battery associated with the transponder (8).

10. Access control device according to one of claims 1 to 9, **characterised in that** in the interior of the vehicle (1) is disposed a transponder receptacle into which a transponder (8) can be inserted and with which is associated an inductive charging device for charging the transponder's (8) battery using the transponder's (8) LF-receiver.

11. Access control device according to claim 10, **characterised in that** a device for carrying out additional question/answer dialogues is associated with the transponder receptacle.

12. Access control device according to one of claims 1 to 11, **characterised in that** a ferrite-core antenna (9) is provided as the antenna for the transponder (8).

13. Access control device according to one of claims 1 to 11, **characterised in that** an air-core coil is provided as the antenna for the transponder (8).

14. Access control device according to one of claims 1 to 13, **characterised in that** the transponder (8) includes a manually actuatable LF transmitting key to transmit a signal via the HF-path to the HF transmitting-and-receiving device (7) associated with the vehicle (1).

15. Method for carrying out a keyless access authorisation check in automotive vehicles, comprising the following steps:
- transmission of coded LF-signals, which lie in the inductive frequency range, by a transmitting-and-receiving device (2) on the vehicle (2),
- reception and recognition of the LF-signal by means of at least one transponder (8),
- transmission of an answer signal from the transponder (8) back to the transmitting-and-receiving device (2) on a HF radio path,
**characterised by**
- transmission from the vehicle of a plurality of different LF-signals, each associated with one side of the vehicle,
- carrying out a bidirectional question/answer dialogue on a HF-path between a HF transmitting-and-receiving unit (7) of the vehicle (1) and a transmitting-and-receiving unit (13) of the transponder (8), which dialogue [comprises] the transmission by the transponder (8) of a cryptically coded answer signal identifying the respective LF-transmitter (4,5,6) from which the LF-signal has been received by the transponder (8),
- recognition and evaluation of the cryptocode by the transmitting-and-receiving device (2) with respect to the LF-transmitter identification contained therein, and
- opening of one or more door locks, which correspond to that door or those doors which corresponds/correspond to the transmitter identification sent back by the transponder (8).

16. Method according to claim 15, **characterised in that** the LF-signals are alternately emitted cyclically, such that the coding of the LF-transmitters is time-slot-controlled.

17. Method according to claim 15 or 16, **characterised in that** each LF-transmitter emits a LF-signal which differs in respect of its code from the signals of the other LF-transmitters.

18. Method according to one of claims 15 to 17, **characterised in that** the question/answer dialogue on the HF-path begins with a key enquiry signal emitted by the HF transmitting-and-receiving unit of the transmitting-and-receiving device located in the automotive vehicle.

19. Method according to one of claims 15 to 18, **characterised in that,** after the locks of the corresponding door(s) of the vehicle have been opened and the person with the transponder or transponders, who has been recognised as authorised, has got into the vehicle, one or more additional question/answer dialogues are carried out between the transmitting-and-receiving device and the transponder.

20. Method according to one of claims 14 to 18, **characterised in that** the transponder (8) assumes predetermined control functions in the automotive vehicle (1) on receiving a plurality of LF-signals from different LF-transmitters (4,5,6)

## Revendications

1. Dispositif de contrôle d'accès sans clé pour véhicules à moteur avec un dispositif émetteur-récepteur (2) affecté au véhicule à moteur (1) et avec au moins un transpondeur mobile (8), lequel dispositif émetteur- récepteur (2) comprenant un émetteur fonctionnant dans une plage de fréquences inductives pour émettre un signal à basse fréquence ainsi qu'un récepteur HF fonctionnant dans une plage de hautes fréquences pour recevoir les signaux de réponse HF du transpondeur (8), lequel transpondeur (8) comprenant un récepteur pour capter le signal BF et un émetteur HF pour émettre un signal de réponse HF après réception du signal BF, **caractérisé en ce que** le dispositif émetteur-récepteur (2) soit muni de plusieurs émetteurs BF (4, 5, 6) pour émettre des signaux à basse fréquence, sachant que chaque émetteur BF (4, 5, 6) correspond à un côté du véhicule à moteur (1) et que chaque émetteur (4, 5, 6) dispose de son propre signal BF qui se différence de celui des autres émetteurs BF (4, 5, 6) et **en ce que** le dispositif émetteur-récepteur (2) soit muni d'un émetteur HF et le transpondeur (8) soit muni d'un récepteur HF, de sorte que le dispositif émetteur-récepteur (2) tout comme le transpondeur (8) présentent une unité émettrice-réceptrice HF (7 ou 13) permettant de réaliser sur la voie de transmission HF, entre le dispositif émetteur-récepteur (2) dans le véhicule et le transpondeur (8) un dialogue question-réponse bidirectionnel à des fins de contrôle d'autorisation d'accès, sachant qu'au moins un signal de réponse HF du transpondeur (8) contient après réception d'un signal BF émis par l'un des émetteurs BF (4, 5, 6) un code de réponse permettant d'identifier l'émetteur BF (4, 5 6) en question afin que le dispositif émetteur-récepteur (2) puisse localiser le transpondeur (8).

2. Dispositif de contrôle d'accès selon la revendication 1 **caractérisé en ce que** les signaux BF des émetteurs BF (4, 5, 6) sont codés par fente de temps, de sorte que les signaux BF d'un émetteur BF (4, 5, 6) sont émis de manière cyclique, sachant que lors d'un intervalle de temps donné, un seul émetteur BF émet un signal BF.

3. Dispositif de contrôle d'accès selon la revendication 1 ou 2 **caractérisé en ce que** les signaux BF des émetteurs BF (4, 5, 6) présentent un code différent.

4. Dispositif de contrôle d'accès selon la revendication 1 **caractérisé en ce que** les signaux BF et/ou signaux HF présentent des phases synchronisées.

5. Dispositif de contrôle d'accès selon l'une des revendications 1 à 4 **caractérisé en ce que** la plage de basses fréquences soit comprise entre 1 kHz et 135 kHz et notamment entre 1 kHz et 25 kHz.

6. Dispositif de contrôle d'accès selon l'une des revendications 1 à 5 **caractérisé en ce que** la plage de hautes fréquences soit située entre 1 MHz et 10 GHz.

7. Dispositif de contrôle d'accès selon l'une des revendications 1 à 6 **caractérisé en ce que** le dispositif émetteur-récepteur (2) affecté au véhicule à moteur (1) comporte plusieurs transpondeurs (8) identifiables en même temps à l'aide d'un protocole anti-collision.

8. Dispositif de contrôle d'accès selon l'une des revendications 1 à 7 **caractérisé en ce que** le dispositif émetteur-récepteur (2) présente un nombre d'émetteurs BF (4, 5, 6) correspondant au nombre d'antennes directives pour permettre une réception orientée des signaux de réponse HF d'un transpondeur (8), sachant que les antennes directives sont orientées dans la direction vers laquelle les émetteurs BF (4, 5, 6) émettent depuis le véhicule à moteur (1).

9. Dispositif de contrôle d'accès selon l'une des revendications 1 à 8 **caractérisé en ce que** la bobine de réception BF du transpondeur (8) est prévue pour charger la batterie affectée au transpondeur (8).

10. Dispositif de contrôle d'accès selon l'une des revendications 1 à 9 **caractérisé en ce que** l'habitacle du véhicule à moteur (1) comprenne un logement de transpondeur dans lequel le transpondeur (8) peut être placé et un dispositif inductif de chargement destiné à recharger la batterie du transpondeur (8) en utilisant le récepteur BF du transpondeur (8).

11. Dispositif de contrôle d'accès selon la revendication 10 **caractérisé en ce que** le logement du transpondeur est muni d'un dispositif pour mener d'autres dialogues question-réponse.

12. Dispositif de contrôle d'accès selon l'une des revendications 1 à 11, **caractérisé par le fait qu'**il est prévu, en guise d'antenne pour le transpondeur (8) une antenne à noyau de ferrite (9).

13. Dispositif de contrôle d'accès selon l'une des revendications 1 à 11, **caractérisé par le fait qu'**il est prévu, en guise d'antenne pour le transpondeur (8), une bobine sans fer.

14. Dispositif de contrôle d'accès selon l'une des revendications 1 à 13, **caractérisé en ce que** le transpondeur (8) comporte une touche d'émission HF qui puisse être actionnée manuellement pour envoyer un signal sur une voie de transmission HF à l'unité émettrice-réceptrice HF (7) affectée au véhicule à moteur (1).

15. Procédé pour réaliser un contrôle d'autorisation d'accès sans clé dans un véhicule à moteur comprenant les étapes suivantes :
- Emission de signaux codés BF dans une plage de fréquences inductives, par un dispositif émetteur-récepteur (2) se trouvant dans le véhicule,
- Réception et identification du signal BF avec au moins un transpondeur (8) et
- Renvoi d'un signal de réponse par le transpondeur (8) au dispositif émetteur-récepteur (2) sur une voie de transmission HF,
**caractérisé par**:
- l'émission depuis le véhicule de plusieurs signaux BF différents, chacun étant affecté à un côté du véhicule,
- la réalisation d'un dialogue question-réponse bidirectionnel sur une voie de transmission HF établie entre une unité émettrice-réceptrice HF (7) du véhicule à moteur (1) et une unité émettrice-réceptrice HF (13) du transpondeur (8), dialogue permettant l'émission d'un signal de réponse codé par cryptage et identifiant l'émetteur BF (4, 5, 6) qui a capté le signal BF par le transpondeur (8),
- l'identification et évaluation d'un cryptocode par le dispositif émetteur-récepteur (2) en perspective d'une identification de l'émetteur BF qu'il contient et
- l'ouverture d'un ou de plusieurs mécanismes de verrouillage de portière, correspondant à la portière ou aux portières qui correspondent à l'identification de l'émetteur renvoyée par le transpondeur (8).

16. Procédé selon la revendication 15, **caractérisé en ce que** les signaux BF sont émis alternativement, de manière cyclique, de sorte que le codage des émetteurs BF est piloté par des fentes de temps.

17. Procédé selon la revendication 15 ou 16, **caractérisé en ce que** chaque émetteur BF émette un signal BF qui se différencie des signaux des autres émetteurs BF par son code.

18. Procédé selon l'une des revendications 15 à 17, **caractérisé en ce que** le dialogue question-réponse commence sur la voie de transmission HF par un signal de détection de clé émis par l'unité émettrice-réceptrice HF d'un dispositif émetteur récepteur situé dans le véhicule, signal dont la validité sera vérifiée dans le transpondeur.

19. Procédé selon l'une des revendications 15 à 18, **caractérisé en ce qu'**un ou plusieurs dialogues question-réponse complémentaires aient lieu entre le dispositif émetteur-récepteur et le transpondeur après ouverture des verrouillages de la (des) portière(s) concernée(s) et entrée dans le véhicule de la personne portant le ou les transpondeurs et ayant été détectée comme personne autorisée.

20. Procédé selon l'une des revendications 14 à 18, **caractérisé en ce que** le transpondeur (8) prenne en charge lors de la réception de plusieurs signaux BF provenant de différents émetteurs BF (4, 5, 6) des fonctions de commande dans le véhicule (1).
